# EUROPÄISCHE PATENTSCHRIFT

(11) **EP 0 641 997 B1**
(45) Veröffentlichungstag und Bekanntmachung des Hinweises auf die Patenterteilung: **14.01.1998**
(21) Anmeldenummer: 94113251.6
(22) Anmeldetag: 25.08.1994
(51) Int. Cl.: G01F 1/34, G01F 1/36

(54) **Kreiselpumpengehäuse mit Fördermengenmesseinrichtung**
Centrifugal pump casing with throughput gauge
Boîtier d'une pompe centrifuge avec débitmètre

(30) Priorität: 06.09.1993 DE 4330097
(43) Veröffentlichungstag der Anmeldung: 08.03.1995
(73) Patentinhaber: KSB Aktiengesellschaft, 67227 Frankenthal (DE)
(72) Erfinder: Hergt, Peter, D-67061 Ludwigshafen (DE)

(56) Entgegenhaltungen:
- DE-B- 1 009 927
- US-A- 5 129 264

## Beschreibung

Die Erfindung betrifft eine Kreiselpumpe gemäß dem Oberbegriff des Hauptanspruches.

Durch die US-A-5 129 264 ist eine Kreiselpumpe bekannt, bei der mittels einer Druckmessung im Druckstutzen auf die Durchflußmenge geschlossen wird. Zu diesem Zweck ist eine erste Druckmeßstelle im Eintrittsquerschnitt des Druckstutzens angeordnet, um den dort herrschenden Druck zu erfassen. Eine zweite Druckmeßstelle ist an einer entfernter liegenden Stelle im Druckstutzen angeordnet. Die im Druckstutzen erfaßte Druckänderung wird für die Ermittlung der Durchflußmenge verwendet.

Nahezu alle Kreiselpumpen sind mit Anschlüssen im Bereich der Saug- und Druckstutzen versehen, die zur Aufnahme von Druckmeßgeräten oder Druckanzeigegeräten vorgesehen sind. Aufgrund der damit ablesbaren Druckunterschiede sind Rückschlüsse auf das Betriebsverhalten der Kreiselpumpe möglich. Für diejenigen Anwendungsfälle jedoch, bei denen man eine genaue Kenntnis über die momentane Fördermenge erhalten möchte, sind aufwendige Meßinstallationen bzw. Umrechnungen notwendig. Eine andere Möglichkeit bieten in die Saug- oder Druckleitung einer Kreiselpumpe integrierbare induktive Durchflußmeßgeräte, die zwar eine hohe Genauigkeit aufweisen, jedoch auch sehr teuer sind.

Andere bekannte Meßverfahren zur Fördermengenerfassung sehen eine aufwendige Erfassung der Pumpenkennlinie und der jeweiligen elektrischen Betriebsdaten vor. Eine Auswertung der während des Betriebes erfaßbaren elektrischen Betriebsdaten erlaubt dann einen Rückschluß auf die derzeit durch die Pumpe zirkulierende Flüssigkeitsmenge.

Der Erfindung liegt das Problem zugrunde, in wenig aufwendiger Weise die momentane Durchflußmenge einer Kreiselpumpe zu erfassen und anzuzeigen. Die Lösung dieses Problems erfolgt gemäß dem Merkmalen des Hauptanspruches. Es ist der

Die Ausgestaltungen der Ansprüche 9 bis 14 befassen sich mit der Anordnung der Druckmeßstellen an den Schaufeln eines Leitrades. Auch hier konnte ein entsprechender Zusammenhang ermittelt werden.

Ein Ausführungsbeispiel der Erfindung ist in den Zeichnungen dargestellt und wird im folgenden näher beschrieben. Es zeigen die
- Fig. 1: eine Anordnung der Druckmeßstellen an einem Spiralgehäuse,
- Fig. 2: eine Vergrößerung aus Fig. 1,
- Fig. 3: an einem Ringraumgehäuse,
- Fig. 4: an einem Leitrad und
- Fig. 5: den Verlauf der Druckdifferenz in Abhängigkeit vom Förderstrom.

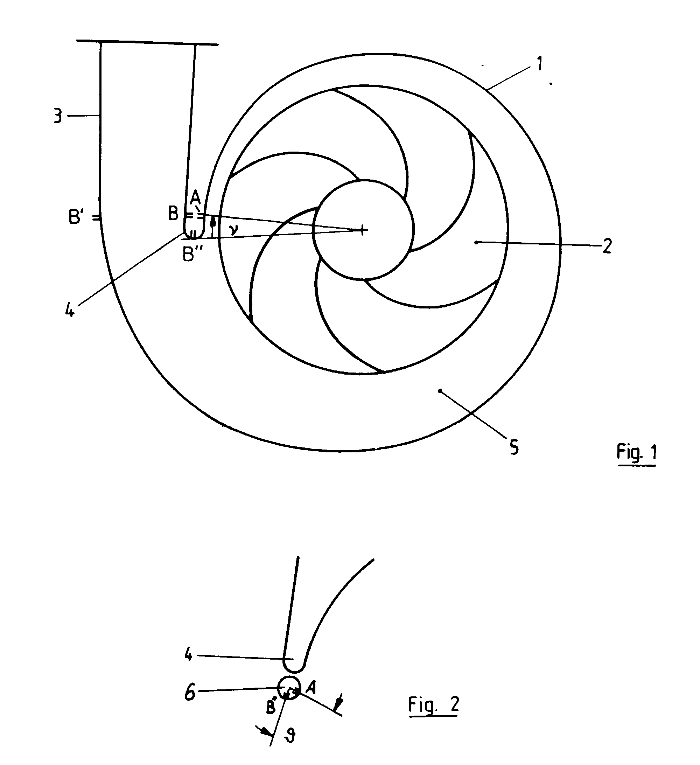

Das in Fig. 1 gezeigte Gehäuse 1 in Spiralbauart verfügt über ein Laufrad 2 und einen Druckstutzen 3. Am Sporn 4 sind die beiden für eine Differenzdruckerfassung notwendigen Druckmeßstellen A, B, B', B'', so angeordnet, daß die eine oder erste Meßstelle A bezüglich ihrer Wirkungsrichtung zum Laufrad 2 hinweist und die andere oder zweite Meßstelle B, B', B'' in den Übergangsbereich zwischen Spirale 5 und Druckstutzen 3 weist. Damit ist eine sichere Erfassung der unterschiedlichen Drücke des von der Spirale beeinflußten Fördermediums möglich. Die im Bereich des Sporns angeordnete Druckmeßstelle B kann bezüglich ihrer Wirkungsrichtung auch als Druckmeßstelle B'' auf das anströmende Medium ausgerichtet sein. Aufgrund von Versuchen hat sich herausgestellt, daß die erste Druckmeßstelle A bezüglich ihrer Wirkungsrichtung zum Laufrad weisen soll und innerhalb eines vom Laufradmittelpunkt ausgehenden und am Sporn oder Leitschaufelanfanges beginnenden Winkels ν < 30°, vorzugsweise < 17°, angeordnet sein soll. Der Winkel ist begrenzt durch einen sich zwischen Laufradmittelpunkt und dem Anfang des umströmten Teiles - hier dem Sporn - erstreckenden Strahles; der Winkel öffnet sich vom Laufradmittelpunkt aus im Drehsinn des Laufrades. Die zweiten Druckmeßstellen B - B'' sind an den in den Ansprüchen angegebenen Orten vorgesehen. Andernfalls ist kein eindeutiger Zusammenhang zwischen Differenzdruck und Fördermenge erhältlich. Die hier gewählte Darstellung des Winkels ν endet genau an der Druckmeßstelle A. Da es sich aber um eine schematische Darstellung handelt, sind die Verhältnisse nicht maßstäblich zu sehen.

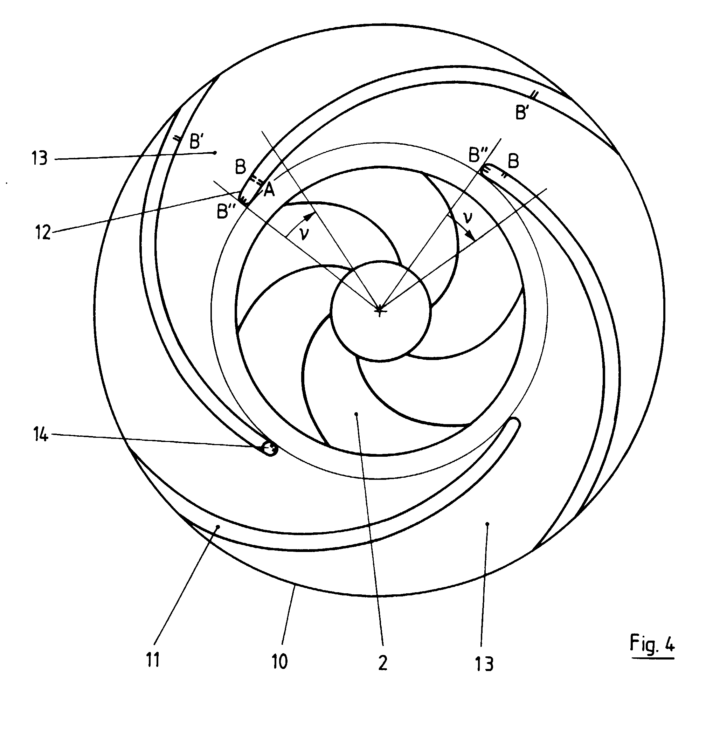

Am Beispiel der Fig. 2, einer vergrößerten Darstellung aus Fig. 1, ist deutlicher erkennbar, daß die beiden Druckmeßstellen A und B oder B'' auch Bestandteil eines separaten Bauteiles 6 sein können. Dieses kann die Spitze des Spornes 4 bilden oder einem Sporn vorangestellt sein. In einfacher Weise ließe sich dieses Bauteil 6 als Einsatz aus seitlicher Richtung, z. B. von der Saugseite her, in das Gehäuse 1 einführen. Die Wirkungsrichtungen der daran jeweils angebrachten Druckmeßstellen AB, AB'' schließen zwischen sich einen Winkel 50° ≤ ϑ ≤ 180° ein und ermöglichen somit die Erfassung von Druckdifferenzen, die eine eindeutige Aussage über die jeweilige Fördermenge zulassen. Diese Vorgehensweise würde auch einen nachträglichen Einbau einer derartigen Fördermengenmeßeinrichtung an bereits installierten Pumpen ermöglichen.

Ebenfalls möglich, aber mit einem geringfügig höheren Aufwand bezüglich der mechanischen Maßnahmen zur Herausführung der Drücke aus dem Gehäuse, ist eine Druckentnahme in Längsrichtung des Spornes.

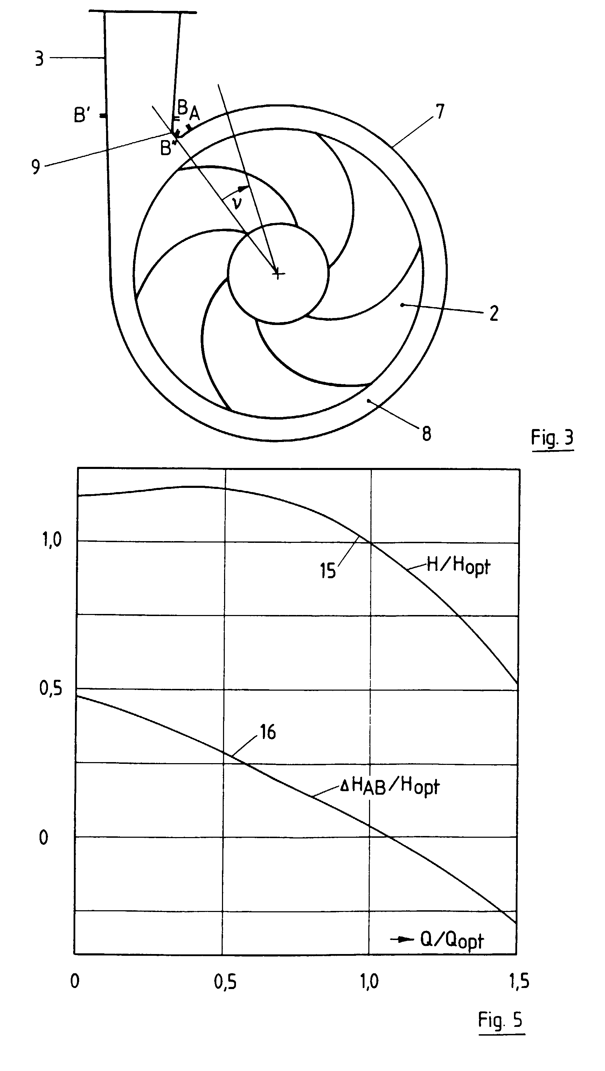

Die Fig. 3 zeigt die Anordnung der Druckmeßstellen am Beispiel eines sogenannten Ringraumgehäuses 7. Das Laufrad 2 ist hierbei von einem Raum gleicher Höhe und Breite umgeben. Im Bereich des Überganges zwischen Ringraum 8 und Druckstutzen 3 befindet sich ein einem Sporn eines Spiralgehäuses entsprechender Druckstutzenanfang 9. Die erste Druckmeßstelle A, befindet sich auch hier innerhalb des vom Laufradmittelpunkt ausgehenden Winkels ν < 30°. Besonders gute Ergebnisse sind in einem Winkelbereich < 17° feststellbar. Der Winkel ν wurde hier als Bereich dargestellt, innerhalb dessen sich die Druckmeßstelle befindet. Dieses Meßprinzip funktioniert auch an Gehäusebauformen, die z. B. eine Kombination von Spiral- und Ringraumgehäuse darstellen. Wesentlich ist, daß die eine Meßstelle A auf der dem Laufrad zugekehrten Seite des Gehäuses angebracht ist und die andere Meßstelle B, B' oder B'' im Eintrittsbereich des Druckstutzens befindlich ist. Auch hier kann ein separates Teil 6, wie in Fig. 1, dem spornähnlichen Druckstutzenanfang 9 vorangestellt werden.

Die Fig. 4 zeigt am Beispiel eines Leitrades 10 die Anordnung der Druckmeßstellen A - B'' auf Leitschaufeln 11. Wesentlich ist auch hier, daß die erste Druckmeßstelle A immer innerhalb des Winkels ν < 30° liegt, gewöhnlich innerhalb eines Winkels ν < 17°. Bei ausgefallenen Bauformen der hier besprochenen Leiteinrichtungen kann die Meßstelle A innerhalb eines größeren Winkelbereiches liegen. Es ist auch ohne weiteres möglich, zwei Druckmeßstellen miteinander zu kombinieren, die auf verschiedenen Leitschaufeln angeordnet sind. Hierbei soll sich aber die erste Druckmeßstelle A innerhalb des vom Schaufelanfang 12 ausgehenden Winkelbereiches ν befinden und auf der dem Laufrad zugekehrten Seite der Leitschaufeln 11 angebracht sein. Die zweite Druckmeßstelle B, B' oder B'' ist auf der dem Leitschaufelkanal 13 zugewandten Leitschaufelseite oder auf dem der Anströmrichtung zugekehrten Leitschaufelanfang 12 angeordnet.

Desgleichen können die Druckmeßstellen auch Bestandteil eines den Leitschaufelanfang bildenden separaten Bauteiles 14 sein. In diesem Fall schließen die Wirkungsrichtungen der den Differenzdruck erfassenden Druckmeßstellen AB, AB'' zwischen sich einen Winkel 50° ≤ ϕ ≤ 180° ein, um eindeutige Meßwerte zu erhalten. Das Bauteil 14 läßt sich in einfacher Weise aus axialer Richtung in die Leiteinrichtung einsetzen.

Die Fig. 5 zeigt in dimensionsloser Darstellung ein Q/H-Diagramm. Über dem als Abszisse dargestellten Förderstrom Q/Qₒₚₜ ist eine Pumpenkennlinie 15 eingetragen. Entsprechend der Erfindung angeordnete Druckmeßstellen ergeben eine Druckdifferenz Δ H_{AB} oder H_{AB'} bzw. H_{AB''}, die in dimensionsloser Darstellung in bezug auf Hₒₚₜ den Kurvenverlauf 16 von Δ H_{AB}/Hₒₚₜ ergeben. Dieser Kurvenverlauf ermöglicht eine zweifelsfreie und eindeutige Zuordnung des Differenzdruckes Δ H_{AB} zur jeweiligen Fördermenge. Der gemessene Differenzdruck kann dann mit Hilfe bekannter Auswerteeinheiten in eine Anzeige für eine Fördermengenangabe umgewandelt werden. Als vorteilhaft hat sich die Verwendung von einzelnen piezoresistiven Druckaufnehmern in ihren verschiedensten Bauformen gezeigt.

## Patentansprüche

1. Kreiselpumpe radialer oder halbaxialer Bauart mit dem Laufrad nachgeordneter, das Fördermedium führender Leiteinrichtung (4, 6, 9, 10, 11, 12, 13), wobei im Pumpengehäuse (1) Anschlüsse für eine Druckerfassung angebracht sind, die Druckerfassung stromab vom Laufrad (2) an zwei Druckmeßstellen (A, B, B', B") erfolgt und eine Auswerteeinheit die Druckdifferenz der beiden Druckmeßstellen in eine Fördermengenangabe umwandelt, **dadurch gekennzeichnet**, daß eine erste Druckmeßstelle (A) an einer dem Laufrad (2) zugekehrten Stelle der Leiteinrichtung innerhalb eines vom Laufradmittelpunkt ausgehenden, am Anfang (4, 6, 9, 12) der Leiteinrichtung beginnenden und sich im Drehsinn des Laufrads öffnenden Winkels ν < 30° angeordnet ist und daß die zweite Druckmeßstelle (B, B' oder B") an einer vom Laufrad (12) entfernten Stelle angeordnet ist.

2. Kreiselpumpe nach Anspruch 1, dadurch gekennzeichnet, daß von den Druckmeßstellen (A, B, B', B'') mindestens eine an einem Sporn eines Spiralgehäuses (1) angebracht ist, wobei die erste Druckmeßstelle (A) innerhalb eines vom Laufradmittelpunkt ausgehenden und am Spornanfang beginnenden Winkels ν < 30° angeordnet ist.

3. Kreiselpumpe nach Anspruch 2, dadurch gekennzeichnet, daß die erste Druckmeßstelle (A) auf der dem Laufrad (2) zugekehrten Seite des Spornes (4) und die zweite Druckmeßstelle (B) auf der dem Innern des Druckstutzens (3) zugekehrten Spornseite angebracht ist.

4. Kreiselpumpe nach Anspruch 2, dadurch gekennzeichnet, daß die erste Druckmeßstelle (A) auf der dem Laufrad (2) zugekehrten Seite des Spornes (4) und die zweite Druckmeßstelle (B'') im Bereich der Spitze des Spornes (4) angebracht ist.

5. Kreiselpumpe nach Anspruch 2, dadurch gekennzeichnet, daß die erste Druckmeßstelle (A) auf der dem Laufrad (2) zugekehrten Seite des Spornes (4) und die zweite Druckmeßstelle (B') im Bereich des Eintrittsquerschnittes des Druckstutzens (3) angebracht ist.

6. Kreiselpumpe nach einem der Ansprüche 1 bis 5, dadurch gekennzeichnet, daß die Druckmeßstellen (A, B, B'') an einem einem Sporn entsprechenden Druckstutzenanfang (9) und die Druckmeßstelle (B') im Bereich des Eintrittsquerschnittes des Druckstutzens (3) eines Ringraumgehäuses (7) angebracht sind.

7. Kreiselpumpe nach einem der Ansprüche 3 bis 6, dadurch gekennzeichnet, daß die eine oder beide Druckmeßstellen (A, B, B'') auf einem einem Sporn- oder Druckstutzenanfang vorgelagerten oder einem Sporn- oder Druckstutzenanfang bildenden Bauteil (6) angeordnet sind.

8. Kreiselpumpe nach Anspruch 7, dadurch gekennzeichnet, daß die Wirkungsrichtungen der auf einem Bauteil (&) angeordneten beiden Druckmeßstellen (AB, AB'') zwischen sich einen Winkel 50° ≤ ϑ ≤ 180° einschließen.

9. Kreiselpumpe nach Anspruch 1, dadurch gekennzeichnet, daß von den Druckmeßstellen (A, B, B', B'') mindestens eine an einem Leitschaufelanfang (12) eines Leitrades angeordnet ist, wobei die erste Druckmeßstelle (A) innerhalb eines vom Laufradmittelpunkt ausgehenden und am Leitschaufelanfang beginnenden Winkel ν < 30° angeordnet ist.

10. Kreiselpumpe nach Anspruch 9, dadurch gekennzeichnet, daß die erste Druckmeßstelle (A) auf einer dem Laufrad (2) zugekehrten Seite eines Leitschaufelanfanges (12) und die zweite Druckmeßstelle (B) auf einer einem Leitschaufelkanal (13) zugekehrten Seite des Leitschaufelanfanges (12) angeordnet sind.

11. Kreiselpumpe nach Anspruch 9, dadurch gekennzeichnet, daß die erste Druckmeßstelle (A) auf einer dem Laufrad (2) zugekehrten Seite eines Leitschaufelanfanges (12) und die zweite Druckmeßstelle (B'') auf einer der Anströmrichtung zugekehrten Seite des Leitschaufelanfanges (12) angeordnet ist.

12. Kreiselpumpe nach Anspruch 9, dadurch gekennzeichnet, daß die erste Druckmeßstelle (A) auf einer dem Laufrad (2) zugekehrten Seite eines Leitschaufelanfanges (12) und die zweite Druckmeßstelle (B') im Bereich des Eintrittsquerschnittes eines Leitschaufelkanales (13) angebracht ist.

13. Kreiselpumpe nach einem der Ansprüche 10 bis 12, dadurch gekennzeichnet, daß die eine oder beide Druckmeßstellen (AB'') auf einem einem Leitschaufelanfang (12) vorgelagerten oder einen Leitschaufelanfang (12) bildenden Bauteil (14) angeordnet sind.

14. Kreiselpumpe nach Anspruch 13, dadurch gekennzeichnet, daß die Wirkungsrichtungen der auf einem Bauteil (14) angeordneten beiden Druckmeßstellen (AB, AB'') zwischen sich einen Winkel 50° ≤ ϑ ≤ 180° einschließen.

## Claims

1. Centrifugal pump of a radial or half-axial type having a guidance device (4, 6, 9, 10, 11, 12, 13) which is arranged downstream of the impeller and guides the pumped medium, connections for pressure detection being fitted in the pump housing (1), which pressure detection takes place downstream of the impeller (2) at two pressure measurement points (A, B, B', B"), and an evaluation unit converting the pressure difference between the two pressure measurement points into a flow-rate parameter, characterized in that a first pressure measurement point (A) is arranged at a point, facing the impeller (2), in the guidance device within an angle ν < 30° originating from the impellar centre, commencing at the start (4, 6, 9, 12) of the guidance device and opening in the rotation direction of the impeller, and in that the second pressure measurement point (B, B' or B") is arranged at a point remote from the impeller (12).

2. Centrifugal pump according to Claim 1, characterized in that at least one of the pressure measurement points (A, B, B', B") is fitted on a projection on a spiral housing (1), the first pressure measurement point (A) being arranged within an angle ν < 30° originating from the impeller centre and commencing at the start of the projection.

3. Centrifugal pump according to Claim 2, characterized in that the first pressure measurement point (A) is fitted on the side of the projection (4) facing the impeller (2), and the second pressure measurement point (B) is fitted on the side of the projection facing the interior of the pressure connecting stub (3).

4. Centrifugal pump according to Claim 2, characterized in that the first pressure measurement point (A) is fitted on the side of the projection (A) facing the impeller (2), and the second pressure measurement point (B") is fitted in the region of the tip of the projection (4).

5. Centrifugal pump according to Claim 2, characterized in that the first pressure measurement point (A) is fitted on the side of the projection (4) facing the impeller (2), and the second pressure measurement point (B') is fitted in the region of the inlet cross-section of the pressure connecting stub (3).

6. Centrifugal pump according to one of Claims 1 to 5, characterized in that the pressure measurement points (A, B, B") are fitted on a pressure connecting stub start (9) which corresponds to a projection, and the pressure measurement point (B') is fitted in the region of the inlet cross-section of the pressure connecting stub (3) of an annular space housing (7).

7. Centrifugal pump according to one of Claims 3 to 6, characterized in that one pressure measurement point or both pressure measurement points (A, B, B") is or are arranged on a component (6) which is mounted upstream of a projection start or pressure connecting stub start, or forms a projection start or pressure connecting stub start.

8. Centrifugal pump according to Claim 7, characterized in that the directions in which the two pressure measurement points (AB, AB") which are arranged on a component (6) act include an angle of 50° ≤ θ ≤ 180° between them.

9. Centrifugal pump according to Claim 1, characterized in that at least one of the pressure measurement points (A, B, B', B") is arranged on a guide vane start (12) of a stator disc, the first pressure measurement point (A) being arranged within an angle ν < 30° originating from the rotor centre and commencing at the guide vane start.

10. Centrifugal pump according to Claim 9, characterized in that the first pressure measurement point (A) is arranged on a side of a guide vane start (12) facing the impeller (2), and the second pressure measurement point (B) is arranged on a side of the guide vane start (12) facing a guide vane channel (13).

11. Centrifugal pump according to Claim 9, characterized in that the first pressure measurement point (A) is arranged on a side of a guide vane start (12) facing the impeller (2), and the second pressure measurement point (B") is arranged on a side of the guide vane start (12) facing the inlet flow direction.

12. Centrifugal pump according to Claim 9, characterized in that the first pressure measurement point (A) is fitted on a side of a guide vane start (12) facing the impeller (2), and the second pressure measurement point (B') is fitted in the region of the inlet cross-section of a guide vane channel (13).

13. Centrifugal pump according to one of Claims 10 to 12, characterized in that one pressure measurement point or both pressure measurement points (A-B") is or are arranged on a component (14) which is mounted upstream of a guide vane start (12) or forms a guide vane start (12).

14. Centrifugal pump according to Claim 13, characterized in that the directions in which the two pressure measurement points (AB, AB'') which are arranged on a component (14) act include an angle of 50° ≤ ϑ ≤ 180° between them.

## Revendications

1. Pompe centrifuge de type radial ou semi-axial, avec un appareil directeur (4, 6, 9, 10, 11, 12, 13) guidant le fluide refoulé, disposé après la roue mobile, dans laquelle on a installé dans le corps de pompe (1) des raccords pour une mesure de la pression, on effectue la mesure de la pression en aval de la roue mobile (2) en deux points de mesure de la pression (A,B,B',B") et une unité d'évaluation convertit la différence de pression des deux points de mesure de la pression en une donnée de débit de refoulement, caractérisée en ce qu'un premier point de mesure de la pression (A) est disposé en un point de l'appareil directeur tourné vers la roue mobile (2) à l'intérieur d'un angle ν < 30° partant du point central de la roue mobile, commençant au début (4, 6, 9, 12) de l'appareil directeur et s'ouvrant dans le sens de rotation de la roue mobile, et en ce que le second point de mesure de la pression (B, B' ou B") est disposé en un point éloigné de la roue mobile (2).

2. Pompe centrifuge selon la revendication 1, caractérisée en ce qu'au moins un des points de mesure de la pression (A, B, B', B") est installé à un éperon d'un corps en spirale (1), le premier point de mesure de la pression (A) étant disposé à l'intérieur d'un angle ν < 30° partant du point central de la roue mobile et commençant au début de l'éperon.

3. Pompe centrifuge selon la revendication 2, caractérisée en ce que le premier point de mesure de la pression (A) est installé sur le côté de l'éperon (4) tourné vers la roue mobile (2) et le second point de mesure de la pression (B) sur le côté de l'éperon tourné vers l'intérieur du tuyau de refoulement (3).

4. Pompe centrifuge selon la revendication 2, caractérisée en ce que le premier point de mesure de la pression (A) est installé sur le côté de l'éperon (4) tourné vers la roue mobile (2) et le second point de mesure de la pression (B") dans la région de la pointe de l'éperon (4).

5. Pompe centrifuge selon la revendication 2, caractérisée en ce que le premier point de mesure de la pression (A) est installé sur le côté de l'éperon (4) tourné vers la roue mobile (2) et le second point de mesure de la pression (B') dans la région de la section d'entrée du tuyau de refoulement (3).

6. Pompe centrifuge selon l'une des revendications 1 à 5, caractérisée en ce que les points de mesure de la pression (A, B, B") sont installés à un début de tuyau de refoulement (9) correspondant à un éperon et le point de mesure de la pression (B') dans la région de la section d'entrée du tuyau de refoulement (3) d'un corps à volume annulaire (7).

7. Pompe centrifuge selon l'une des revendications 3 à 6, caractérisée en ce qu'un ou les deux points de mesure de la pression (A, B, B") sont disposés sur une pièce (6) placée avant un début d'éperon ou de tuyau de refoulement ou formant un début d'éperon ou de tuyau de refoulement.

8. Pompe centrifuge selon la revendication 7, caractérisée en ce que les directions d'action des deux points de mesure de la pression (AB, AB") disposés sur une pièce (6) comprennent entre elles un angle 50° ≤ θ ≤ 180°.

9. Pompe centrifuge selon la revendication 1, caractérisée en ce qu'au moins un des points de mesure de la pression (A, B, B', B") est disposé à un début d'aube directrice (12) d'une roue directrice, le premier point de mesure de la pression (A) étant disposé à l'intérieur d'un angle ν < 30° partant du point central de la roue mobile et commençant au début de l'aube directrice.

10. Pompe centrifuge selon la revendication 9, caractérisée en ce que le premier point de mesure de la pression (A) est disposé sur un côté d'un début d'aube directrice (12) tourné vers la roue mobile (2) et le second point de mesure de la pression (B) sur un côté du début d'aube directrice (12) tourné vers un canal d'aubes directrices (13).

11. Pompe centrifuge selon la revendication 9, caractérisée en ce que le premier point de mesure de la pression (A) est disposé sur un côté d'un début d'aube directrice (12) tourné vers la roue mobile (2) et le second point de mesure de la pression (B") sur un côté du début d'aube directrice (12) tourné vers la direction d'admission.

12. Pompe centrifuge selon la revendication 9, caractérisée en ce que le premier point de mesure de la pression (A) est disposé sur un côté d'un début d'aube directrice (12) tourné vers la roue mobile (2) et le second point de mesure de la pression (B') dans la région de la section d'entrée d'un canal d'aubes directrices (13).

13. Pompe centrifuge selon l'une des revendications 10 à 12, caractérisée en ce qu'un ou les deux points de mesure de la pression (A-B") sont disposés sur une pièce (14) placée avant un début d'aube directrice (12) ou formant un début d'aube directrice (12).

14. Pompe centrifuge selon la revendication 13, caractérisée en ce que les directions d'action des deux points de mesure de la pression (AB, AB") disposés sur une pièce (14) comprennent entre elles un angle 50° ≤ θ ≤ 180°.
